Europäisches Patentamt

European Patent Office

Office européen des brevets

(19)

(11) Veröffentlichungsnummer: **0 139 988**

A2

(12) **EUROPÄISCHE PATENTANMELDUNG**

(21) Anmeldenummer: **84110046.4**

(22) Anmeldetag: **23.08.84**

(51) Int. Cl.⁴: **H 02 J 7/04**
**H 02 J 7/10**

(30) Priorität: **07.09.83 DE 3332201**

(43) Veröffentlichungstag der Anmeldung:
**08.05.85 Patentblatt 85/19**

(84) Benannte Vertragsstaaten:
**DE FR NL SE**

(71) Anmelder: **Kienzle Apparate GmbH**
**Prinz-Eugen-Strasse 20**
**D-7730 Villingen-Schwenningen(DE)**

(72) Erfinder: **Seyfried, Herbert**
**Alban-Dold-strasse 28**
**D-7730 Villingen-Schwenningen(DE)**

(54) **Schaltungsanordnung und Verfahren zur bedarfsmässigen Steuerung der Aufladung eines Akkumulators.**

(57) Schaltungsanordnung und Verfahren zur bedarfsmäßigen Steuerung der Aufladung eines Akkumulators

Die Erfindung bezieht sich auf eine Schaltungsanordnung und ein Verfahren zur bedarfsmäßigen Steuerung der Aufladung eines Akkumulators zur Standby-Versorgung eines Mikro-Computer-Systems.

In den meisten Mikro-Computer-Systemen, in denen eine solche Standby-Stromversorgung gebraucht wird, is ein Uhrenschaltkreis (22) vorhanden, der zur Steuerung des Ladestromes (IL) verwendet werden kann. Man speichert dazu die Aus- und Einschaltzeiten des Systems ab und errechnet in einer Rechenschaltung (4) ein evtl. Ladungsdefizit ($\Delta Q$) des Akkumulators. Dieses errechnete Ladungsdefizit ($\Delta Q$) ist dann die Grundlage für die Hinzuschaltung eines zusätzlichen Ladestromes (IL) für eine rechnerisch bestimmbare Ladezeit ($\Delta t_L$).

FIG.1

EP 0 139 988 A2

29.08.1983 0139988
011.12 sche zw
Akte 1829

Schaltungsanordnung und Verfahren zur bedarfsmäßigen Steuerung
der Aufladung eines Akkumulators

Die Erfindung bezieht sich auf eine Schaltungsanordnung und ein
Verfahren zur bedarfsmäßigen Steuerung der Aufladung eines Akkumulators zur Standby-Versorgung eines Mikro-Computer-Systems.

Die Verwendung von Mikro-Computer-Systemen zur Erfassung von
Daten, Berechnung von Preisen an Warenabgabestellen und Speicherung der Daten, beispielsweise an Tankstellen, oder der Erfassung, Errechnung und Speicherung von Fahrpreisen und sonstigen
Dienstleistungen im Taxibetrieb hat sich seit einiger Zeit stark
verbreitet. Im Zusammenhang mit dem dabei eingesetzten Computer-
system gilt es, eine ständige Versorgung gewisser Teile des Computersystemes, wie beispielsweise Uhrenschaltkreise, Speicherbausteine, CMOS-Logik usw., mit einer Betriebsspannung zu gewährleisten. Ausfälle in der Spannungsversorgung durch Netzausfälle
sind nicht absolut vermeidbar und führen dann, wenn sie auftreten, zu irreparablen Ausfällen von beispielsweise wichtigen, gespeicherten Daten, Funktionsprogrammen und dergl. im Computer-
system. Es ist daher unerläßlich, bei evtl. auftretenden Netzausfallzeiten oder auch Abschaltphasen für Geräte für den Bereich der Mikro-Computer-Systeme eine unabhängige Standby-Versorgung vorzusehen, die in der Regel durch einen Akkumulator zu
bewerkstelligen ist.

Akkumulatoren zeichnen sich ganz allgemein dadurch aus, daß
ihnen im geladenen Zustand ein Strom entnommen werden kann, und
sie danach wieder geladen werden können. Dabei ist grundsätzlich
zu beachten, daß dem Akkumulator in gewissen Zeitabständen genau die Strommengen wieder zugeführt werden, die er zuvor an
einen Verbraucher abgegeben oder aber auch durch Selbstentladung verloren hat.

Wünschenswert beim Laden eines Akkumulators ist es, einerseits den Akkumulator schnell nachzuladen, so daß möglichst bald die gesamte Ladungskapazität wieder zur Verfügung steht, andererseits sollte das Überladen möglichst vermieden bleiben. Sowohl ein zu hoher Ladestrom als auch eine ständige Überladung wirken sich äußerst negativ auf die Lebensdauer des Akkumulators aus. Im ungünstigsten Fall kann dabei die Gasbildung im Akkumulator zur Zerstörung desselben führen.

Wird der Ladestrom jedoch zu klein gewählt, dann steht im Bedarfsfall evtl. nicht die volle Kapazität zur Verfügung. Das passiert insbesondere dann, wenn der Akkumulator in einem Gerät als Pufferung dient. Sind dann die Ausschaltzeiten des Gerätes (z. B. über Nacht) groß und die Einschaltzeiten relativ kurz, ist eine einwandfreie Ladung des Akkumulators nicht mehr gewährleistet. Bei solchen Geräten wird im Sinne der Auffüllung und Erhaltung der Ladungskapazität des Akkumulators oft empfohlen, das Gerät über Nacht eingeschaltet zu lassen oder eine bestimmte, regelmäßige Einschaltdauer nicht zu unterschreiten.

Es gibt vom Prinzip her gesehen drei grundsätzliche Lademethoden, die bei der Schaffung einer optimalen Ladeschaltung zu beachten sind, nämlich Laden mit Konstantstrom, Laden mit konstanter Spannung und das Laden mit Widerstandskennlinie.

Beim Laden des Akkumulators mit Konstantstrom wird die Spannung vom Ladegerät stets so verändert, daß der Ladestrom konstant bleibt. Wenn der Akkumulator dann geladen ist, muß der Strom abgeschaltet werden, da sonst die Gefahr der Überladung besteht mit den daraus resultierenden Folgen für die Lebensdauer des Akkumulators.

Beim Laden mit konstanter Spannung wird letztere vom Ladegerät konstant gehalten. Der Ladestrom wird durch die Differenz zwischen Ladespannung und Akkumulatorspannung und dem inneren Widerstand des Akkumulators bestimmt. Bedingt durch diese Zusammenhänge entsteht ein hoher Anfangsladestrom, der möglichst begrenzt werden sollte. Zusätzlich muß die Temperatur des Akkumulators überwacht werden, um ihn vor Zerstörung zu schützen.

Die dritte Lademethode schließlich arbeitet gemäß der Charakteristik der Widerstandskennlinie. Das heißt bei einer derartigen Ladeschaltung bleibt die Ladespannung konstant. Der Ladestrom dagegen ist abhängig von der Gegenspannung des Akkumulators und der Größe des Begrenzungswiderstandes. Es ist bei der Auslegung der Schaltungsanordnung darauf zu achten, daß der Begrenzungswiderstand und die Ladespannung so gewählt werden, daß der Ladestrom bei geladenem Akkumulator sich auf die Größenordnung des Erhaltungsladestromes einstellt. Unter dem Begriff des Erhaltungsladestromes ist der Strom zu verstehen, der dem Akkumulator ohne eine zeitliche Begrenzung gerade noch zugeführt werden darf und der gelegentliche Teilentladungen ausgleicht. Der unvermeidbare Nachteil dieser Schaltungsanordnung besteht darin, daß dann der Ladestrom bei einem entladenen Akkumulator relativ klein ist und somit der Ladevorgang sehr lange dauert.

Das Ladeverfahren mit Konstantstrom oder gemäß der Wirkungsweise der Widerstandskennlinie wird mit dem Ziel der Vermeidung von schadhaften Auswirkungen auf den Akkumulator oft auch dahingehend modifiziert, daß beim Erreichen eines bestimmten Ladezustandes der Ladestrom abgeschaltet wird und dadurch eine Überladung vermieden bleibt. Als Maß für den Ladezustand des Akkumulators wird dazu die Spannung am Akkumulator verwendet. Aber auch hierbei gibt es vor allem bei den im Elektronikbereich verwendeten NiCd-Akkumulatoren einige erhebliche Erschwernisse. Charakteristisch für den NiCd-Akkumulator ist, daß die Spannung relativ wenig von der Ladung abhängig ist, d.h. erst bei 30 % der Ladung sinkt auch die Spannung ab, so daß infolgedessen die Spannung kein zuverlässiger Nachweis für den Ladezustand darstellt. Darüber hinaus verhält sich die Spannung sehr temperaturabhängig, so daß beispielsweise ein nur zu 30 % geladener

C139988

NiCd-Akkumulator bei 20 % C etwa die gleiche Ladespannung aufweist wie ein zu 100 % geladener Akkumulator bei 40° C. Schließlich ist die Spannung zusätzlich noch sehr stark abhängig vom augenblicklichen Ladestrom.

Hieraus resultiert, daß ein Ladestrom, der sich nach der Spannung am NiCd-Akkumulator orientiert, nur mit sehr hohem Schaltungsaufwand zu realisieren ist.

Als Voraussetzung für einen Ladevorgang geht man deshalb von einem entladenen Akkumulator aus, den man mit einem konstanten Ladestrom über eine festgelegte Zeit, die sich aus der Kapazität des Akkumulators errechnen läßt, auflädt. Das Ergebnis hiervon ist, daß man zwar einen geladenen Akkumulator hat, falls er aber mit hoher Wahrscheinlichkeit überladen wurde, so unter erheblicher Einbuße an Lebensdauer.

Aufgabe der Erfindung ist es, eine Schaltungsanordnung und ein Verfahren zu entwickeln für die bedarfsmäßige Steuerung der Aufladung eines Akkumulators zur Standby-Versorgung eines Mikro-Computer-Systems, die automatisch ein Ladungsdefizit ermittelt und entsprechend einen Ladevorgang steuert bis zum Ausgleich des Ladungsdefizits.

Diese Aufgabe wird dadurch gelöst, daß ein Uhrenschaltkreis (real-time-clock) vorgesehen ist zur Ermittlung der Ein- und Ausschaltzeiten des Mikro-Computer-Systems, daß die Ein- und Ausschaltzeiten speicherbar sind und daß mittels des Mikro-Computers aus einer Ausschaltzeit und einem durch Verbraucher bestimmten Entladestrom ein Ladungsdefizit errechenbar ist, daß beim Wiedereinschalten des Mikro-Computer-Systems eine Rechenschaltung eine entsprechend erforderliche Aufladezeit ermittelt und zeitgesteuert über ein Relais und einen Schalter einen Ladestromkreis schließt für die Dauer der ermittelten Aufladezeit.

Anhand der Zeichnungen wird in der Folge ein Ausführungsbeispiel der Erfindung dargestellt und erläutert. Dabei sind die nicht unmittelbar mit dem Gegenstand der Erfindung in Zusammenhang stehenden Teile des Mikro-Computer-Systems fortgelassen.

Es zeigt die

FIG. 1 die Prinzipschaltung einer Standby-Versorgung in der Phase des Entladevorganges des Akkumulators, d.h. wenn das Gerät ausgeschaltet ist,

FIG. 2 ein schematisiertes Ausführungsbeispiel einer Ladeschaltung im Zusammenwirken mit einem Uhrenschaltkreis und den damit ermittelbaren Ein- und Ausschaltzeiten des Gerätes und einem Mikro-Computer-System zur Errechnung einer Ladungszeit und einer dementsprechenden Steuerung einer Ladeschaltung.

Der Grundgedanke für eine optimale Lösung war, dem Akkumulator beim Ladevorgang genau die Strommenge zuzuführen, die er zuvor in der Phase der Standby-Versorgung abgegeben hat. Es soll also das während der Ausschaltzeit des Gerätes entstandene Ladungsdefizit durch eine entsprechende Ladungszufuhr wieder ausgeglichen werden.

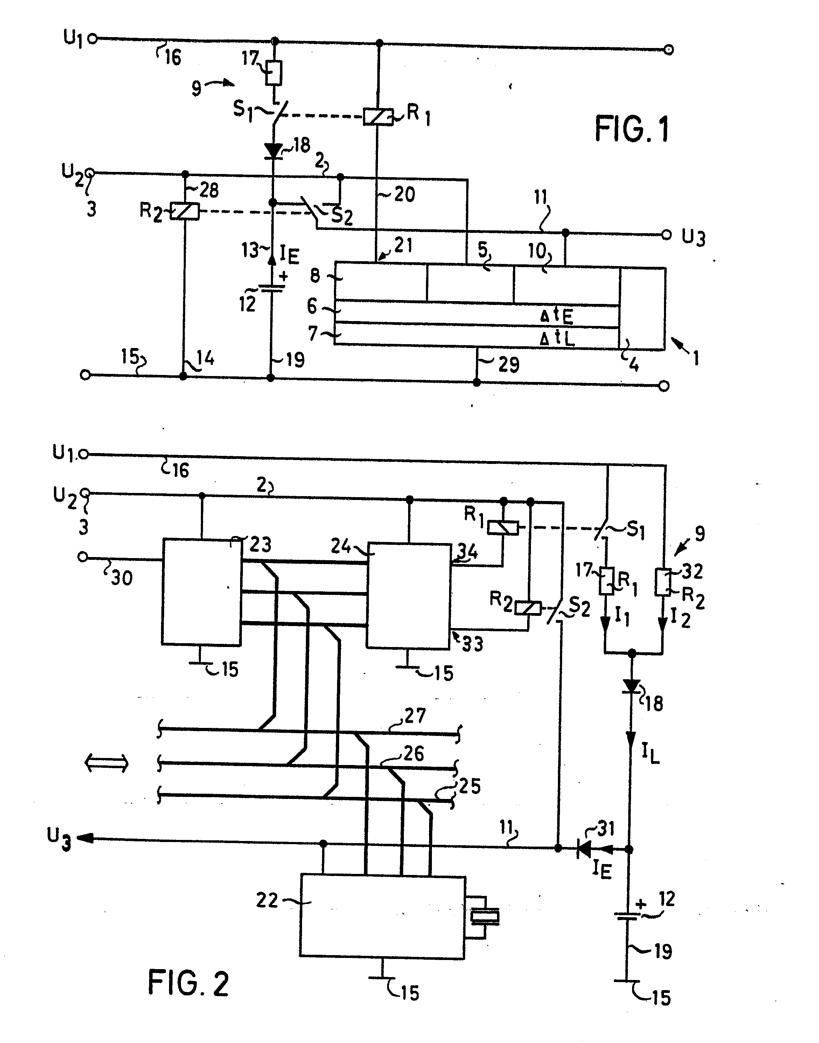

Das Ladungsdefizit $\triangle Q$ läßt sich aus der Entladezeit $\triangle t_E$, das ist üblicherweise die Ausschaltzeit des Gerätes, und dem Entladestrom $I_E$, der während der Abschaltzeit an die Verbraucher abgegeben wurde, bestimmen. Der Entladestrom $I_E$ ist durch die Verbraucher, die in der Praxis aus einem Uhren-IC, Speicherbausteinen usw. und dem Strom zum Ausgleich der Selbstentladung des Akkumulators bestehen, gegeben. Die Entladezeit $\triangle t_E$ wird mit einer Zeiterfassungsschaltung 1, wie sie als Block in FIG. 1 dargestellt ist, gemessen, indem über eine Leitung 2 die Ausschaltzeit des nicht näher dargestellten Gerätenetzteils am Anschluß 3 in der Zeiterfassungsschaltung 1 bestimmt wird. Das Ladungsdefizit $\Delta Q$ kann somit beim Wiedereinschalten des Gerätes durch eine elektronische Rechenschaltung 4 berechnet werden. Es gilt dann die Beziehung: $\Delta Q = I_E \cdot \Delta t_E$. Der Block der Zeiterfassungsschaltung 1 besteht im wesentlichen, wie aus FIG. 1 erkennbar ist, aus einem Funktionsblock 5 zur Erfassung der Ausschaltzeit des Gerätes mit der Eingangs-Leitung 2, aus einem Funktionsblock 6 zur Erfassung der gesamten Entladezeit $\Delta t_E$, aus der bereits erwähnten Rechenschaltung 4, aus einem Funktionsblock 7 zur Steuerung der Ladezeit $\Delta t_L$, aus einem Ausgabe-Baustein 8 als Schaltausgang für die Steuerung eines Ladestromkreises 9 und schließlich aus einem Block 10 für die Spannungsversorgung der Zeiterfassungsschaltung 1. Die Spannungsversorgung der Zeiterfassungsschaltung 1 wird über eine Leitung 11, deren Ende auch gleichzeitig zu den Verbrauchern geführt ist, hergestellt. Über einen Schalter S 2 ist jeweils abhängig vom Ein- bzw. Ausschaltzustand des Gerätes die Versorgung der Verbraucher entsprechend aus dem Geräte-Netzteil bzw. einem Akkumulator 12 zu bewerkstelligen. Hierzu ist die Leitung 11 über den Schalter S 2 mit der Leitung 2 verbindbar, wenn das Gerät bzw. das nicht näher dargestellte Netzteil eingeschaltet ist. Die Spannungsversorgung der Verbraucher am Anschluß U 3 erfolgt dann aus dem nicht näher gezeigten Netzteil über den Anschluß 3 (U 2). Gleichzeitig wird über Leitung 2 in der Zeiterfassungsschaltung 1 die Einschaltzeit des Gerätes ermittelt. Wird das Gerät ausgeschaltet, verbindet der Schalter S 2 die Versorgungs-Leitung 11 mit einer Leitung 2, die an den Pluspol des Akkumulators 12 führt. Die Betätigung des Schalters S 2, der funktionell als Umschalter zu betrachten ist, geschieht gemäß einer vereinfachten Darstellungsform durch ein Relais R 2, welches einerseits über eine Leitung 28 an die Leitung 2 mit der Spannung U 2 angeschlossen und andererseits über eine Leitung 14 mit einer gemeinsamen Null-Leitung 15 verbunden ist. Der Ladestromkreis 9 besteht - vereinfacht dargestellt - aus einer Spannungs-Versorgungsleitung 16, die aus dem Netzteil eine Spannung U 1 entnimmt, verbunden in Serienschaltung mit einem Widerstand 17, einem Schalter S 1, einer Diode 18, deren Ausgang über die Leitung 13 an den positiven Anschluß (Pluspol) des Akkumulators 12 geführt ist. Der Minuspol des Akkumulators 12 ist über eine Leitung 19 mit der Leitung 15 verbunden. Der Schalter S 1 ist bedarfsmäßig steuerbar durch ein Relais R 1, das einerseits mit der Leitung 16 verbunden an die Spannung U 1 angelegt ist, andererseits über eine Leitung 20 mit einem Schaltausgang 21 für Ladestrom am Ausgabe-Baustein 8 verbunden ist. Der gesamte Block der Zeiterfassungsschaltung 1 liegt vereinfacht dargestellt über eine Leitung 29 am Nullpotential der Leitung 15. Ausgangsseitig der Leitung 11 wird gemäß der Schaltungsanordnung nach FIG. 1 eine gepufferte Spannung U 3 für die Verbraucher bereitgestellt.

In der Prinzipschaltung nach FIG. 1 befindet sich die Schaltungsanorndung in dem Zustand, in dem das Gerät (respektive das Netzteil) ausgeschaltet ist und vom Akkumulator 12 über den Schalter S 2 eine gepufferte Versorgungsspannung U 3 an die Verbraucher geliefert wird. Der Akkumulator 12 wird dadurch entsprechend entladen. Während dieser Ausschaltzeit des Gerätes wird die Entladezeit $\Delta t_E$ im Funktionsblock 6 erfaßt.

Unmittelbar beim Wiedereinschalten des Gerätes kommt die gepufferte Versorgungsspannung vom Netzteil über den vom Relais R 2 auf die Leitung 2 umgelegten Schalter S 2. Die Einschaltzeit wird gleichfalls registriert, und eine Entladezeit $\Delta t_E$ des Akkumulators 12 errechnet sich aus der Beziehung $\Delta t_E =$ Einschaltzeit minus Ausschaltzeit. Aus dem Produkt der Entladezeit $\Delta t_E$ mal dem Entladestrom $I_E$ ist das Ladungsdefizit $\Delta Q$ errechenbar. Aus dem Ladungsdefizit $\Delta Q$, einem Ladefaktor $f_L$ und einem Ladestrom $I_L$ wiederum ist die Ladezeit nach folgender Beziehung errechenbar:

$$\Delta t_L = \frac{\Delta Q}{I_L} \cdot f_L$$

Für die Zeitdauer $\Delta t_L$ wird der Ladestrom $I_L$ dem Akkumulator 12 zugeführt durch entsprechende Steuerung des Schalters S 1 in die Schließstellung über den Schaltausgang 21 für Ladestrom des Ausgabebausteines 8.

Ein praktisches Beispiel einer Schaltungsanordnung für die bedarfsmäßige Steuerung der Aufladung eines Akkumulators 12 in einem Mikro-Computer-System ist in der FIG. 2 gezeigt. Über die Anordnung nach FIG. 1 hinaus sind in FIG. 2 die Zusammenhänge innerhalb eines Mikro-Computer-Systems dargestellt. Im wesentlichen gehört zur erfindungsgemäßen Schaltungsanordnung ein Uhrenschaltkreis 22 (real-time-clock), ein Mikroprozessor 23 und ein Eingabe/Ausgabe-Baustein 24, die untereinander mit Data(25), Control-(26) und Address-(27)-Bus-Leitungen verbunden sind. Die Data-(25), Control-(26) und Address-(27)-Leitungen sind im Rahmen des Datenverkehrs zu weiteren, nicht näher angezeigten Bausteinen, wie PROM, RAM und weiterer Peripherie geführt. Der Mikroprozessor 23 ist über eine Leitung 30 mit einem nicht näher angezeigten Spannungswächter im Netzteil verbunden zur Übernahme und Auswertung der Zustandssignale in bezug auf die Einschalt- und Ausschaltphase des Netzteiles.

Die Schaltungsanordnung für die Aufladung des Akkumulators 12 und Standby-Versorgung bei Geräteausschaltphasen arbeitet wie folgt: Geht man für den Anfangszustand davon aus, daß sich das Gerät im Einschaltzustand befindet, ist der Akkumulator 12 geladen. Hierbei ist der Schalter S 2 geschlossen. Die angelegte, gepufferte Versorgungsspannung U 3, z. B. für CMOS, RAM u. dergl. entspricht der Spannung U 2. Eine Diode 31 ist gesperrt und trennt somit den Akkumulator 12 von den Verbrauchern. Der Entladestrom $I_E$ ist gleich Null. Die Selbstentladung wird kompensiert durch die Beziehung $I_L = I 1 + I 2$. Da im Einschaltzustand der Schalter S 1 geöffnet ist, folgt, daß $I_L = I 2$. Ein im Ladestromkreis 9 gemäß FIG. 2 vorgesehener Widerstand 32 ist so bemessen, daß der durch den Widerstand 32 begrenzte Strom gleich dem Erhaltungsladestrom I 2, bei NiCd-Akkumulatoren in der
Größenordnung von 0,1 mal dem Ladestrom I1 ist.

Wird das Gerät ausgeschaltet, so zeigt der Spannungswächter aus
dem nicht näher gezeigten Netzteil diese Veränderung an. Der
Mikroprozessor 23 übernimmt von der Real-Time-Clock 22 die Ausschaltzeit und speichert sie ab. Der Mikroprozesser 23 öffnet
über einen Schaltausgang 33 am Eingabe/Ausgabe-Baustein 24 und
das Relais R 2 den Schalter S 2. Nunmehr liefert der Akkumulator 12 über die Diode 31 die gepufferte Versorgungsspannung U 3
an die Verbraucher. Die Diode 18 im Ladestromkreis 9 ist gesperrt. Es fließt in Abhängigkeit der Verbraucher ein Entladestrom $I_E$ in der Leitung 11.

Der nächste Zustand der Schaltung ist wiederum gekennzeichnet
durch das Einschalten des Gerätes. In der Folge schließt der
Mikroprozessor 23 über den Schaltausgang 33 und das Relais R 2
den Schalter S 2. Die gepufferte Versorgungsspannung U 3 ist
gleich der Spannung U 2 am Anschluß des Netzteiles. Die Diode
31 ist gesperrt und der Akkumulator 12 von den Verbrauchern abgetrennt. Lediglich über den Widerstand 32 und die Diode 18
fließt ein Erhaltungsladestrom I 2 in den Akkumulator 12.

Der Mikroprozessor 23 übernimmt die Einschaltzeit des Gerätes
von der Real-Time-Clock 22 und berechnet aus Einschaltzeit minus
Ausschaltzeit die Entladezeit $\Delta t_E$. Aus der Entladezeit $\Delta t_E$
mal dem Entladestrom $I_E$ ermittelt der Mikroprozessor 23 schließlich das Ladungsdefizit $\Delta Q$. In einem weiteren Rechenvorgang
wird die Ladezeit $\Delta t_L$, während der der zusätzliche Ladestrom I 1
dem Akkumulator 12 zugeführt werden soll, festgestellt nach folgender mathematischer Beziehung:

$$\Delta t_L = \frac{\Delta Q}{I1+I2} \cdot f_L$$

Über einen Schaltausgang 34, das Relais R 1 und den Schalter S 2 wird vom Mikroprozessor 23 aus gesteuert der Ladestromkreis 9 geschlossen, und es fließt ein zusätzlicher Ladestrom $I_L$ in den Akkumulator 12. Nun wartet der Mikroprozesser 23, bis die Ladezeit $\Delta t_L$ abgelaufen ist. Als Zeitreferenz dient hierzu wieder die Real-Time-Clock 22. Nach Ablauf der Ladezeit $\Delta t_L$ öffnet der Mikroprozessor 23 über den Schaltausgang 34 und das Relais 21 den Schalter S 1. Der Akkumulator 12 ist danach durch einen gesteuerten, exakten Ausgleich des über den Mikro-Computer 23 ermittelten Ladungsdefizits $\Delta Q$ wieder geladen. Die Schaltungsanordnung befindet sich nun wieder im Ausgangszustand. Die Schaltungsanordnung bleibt auch nicht beschränkt auf die in der Beschreibung angegebenen Schaltelemente. Sie ist im Prinzip realisierbar mit allen geeigneten Bauelementen.

**Patentanspruch:**

Schaltungsanordnung und Verfahren zur bedarfsmäßigen Steuerung der Aufladung eines Akkumulators zur Standby-Versorgung eines Mikro-Computer-Systems, dadurch gekennzeichnet, daß ein Uhrenschaltkreis (22) (real-time-clock) vorgesehen ist zur Ermittlung der Ein- und Ausschaltzeiten des Mikro-Computer-Systems, daß die Ein- und Ausschaltzeiten speicherbar sind und daß mittels des Mikro-Computers aus einer Ausschaltzeit und einem durch Verbraucher bestimmten Entladestrom ($I_E$) ein Ladungsdefizit ($\Delta Q$) errechenbar ist, daß beim Wiedereinschalten des Mikro-Computer-Systems eine Rechenschaltung (4) eine entsprechend erforderliche Aufladezeit ($\Delta t_L$) ermittelt und zeitgesteuert über ein Relais (1) und einen Schalter (S 1) einen Ladestromkreis (9) schließt für die Dauer der ermittelten Aufladezeit ($\Delta t_L$).

- 1/1 -

0139988

FIG. 1

FIG. 2